Europäisches Patentamt

European Patent Office

Office européen des brevets

(11) Publication number: **0 167 680**
**A2**

# EUROPEAN PATENT APPLICATION

(21) Application number: **84201859.0**

(22) Date of filing: **13.12.84**

(51) Int. Cl.⁴: **B 60 N 1/00**

(30) Priority: **10.07.84 IT 5362684 U**

(43) Date of publication of application:
**15.01.86 Bulletin 86/3**

(84) Designated Contracting States:
**AT BE CH DE FR GB LI LU NL SE**

(71) Applicant: **CO.VE.IN. Componenti Veicoli Industriali - S.r.l.**
**Z.I.R.O.**
**I-33010 Osoppo (Udine)(IT)**

(72) Inventor: **Alvio de Simon, Dr.**
**via F. Asquini, 11**
**I-33100 Udine(IT)**

(74) Representative: **Robba, Eugenio**
**Studio "INTERPATENT" via Caboto 35**
**I-10129 Turin(IT)**

(54) **Modular bus seat.**

(57) A modular bus seat adapted to be converted from a seat for city buses into a seat for suburban and long distance buses by mounting on a base structure or body (1) with associated handle (5) and rear cover (3) (city bus), further elements such as cushions and a back (7) (suburban buses) and head-rest (13) and arm-rests (21) (long distance buses).

FIG.3

-1-

MODULAR BUS SEAT

This invention relates to a modular bus seat, i.e. a seat composed of modular elements which, according to the destination for which they are intended, are assembled by including or excluding some of its components.

It is known that bus seats, according to the type of bus for which they are intended to be used, must fulfill various needs which necessitate accessories or additional elements which constitute the comfort of a bus seat, for example, for a long distance bus and at the same time are obstructive elements in a bus seat for a bus, for example, for city traffic.

In other words, a seat for a line bus in city traffic must meet different requirements that are typical for this type of bus such as a certain flow of the passengers, ease of movement of the passengers, short stay on the bus and thus ease of sitting down and getting up.

On the contrary, a seat for a bus for long distance traffic must be comfortable, must comfortably receive the passengers and permit them to relax as there is practically no problem of a rapid flow of passengers and their stay on these buses is decidedly much longer than the time required for getting on and off.

A correct solution to this problem would be to design a seat for each type of bus, i.e. one for a city bus, one for a suburban bus and one for a long distance bus.

But obviously this solution, although it would be correct, would also be the most expensive one.

It is an object of the present invention to eliminate these disadvantages which are due to this multiplicity of requirements, of use and design, by providing a modular bus seat in which the various requirements of various bus seats are met by the application or removal, to or from a base structure, of certain modular elements required for that solution.

The seat according to the invention is characterized in that it is composed of a plurality of modular elements such as:

a base body formed of a single element moulded of a suitable plastics material such as, for example, polyamide of another type of resin, reinforced by fibreglass and moulded so as to form in the upper portion the transverse holding handle, said body being appropriately ribbed to ensure a certain bending strength of the seat and improve the conditions for mounting it on the base;

a rear cover made of two pieces, a right-hand and a left-hand one, to cover the side portions of the back of the base body so as to conceal all fixing elements (screws, etc.);

a sectional member adapted to complete the transverse handle of the base body (optional);

a padded cushion and back made of two or in one piece, for example, of foamed polyurethane having an outer surface or "skin" that forms itself together with said material, or coated with fabric, said padded cushion and back being secured to the base body either directly or through a support member (for example, of curved plywood) by means of screws and inserts;

a head-rest made of one piece of foamed plastics with a "skin" that forms itself and provided with an inner frame to permit it to be firmly secured to the base-body, and formed integrally with vertical handles;

a tiltable lateral arm-rest to be secured to the right-hand or left-hand side of the back.

The modular elements described above permit the following solutions:

a) single seat for city buses;

base body, rear cover, handle sectional member (optional);

b) single and double seat for suburban buses:

base body, rear cover, handle sectional member (optional);

padded cushion and back of a material having a self-forming "skin" or alternatively coated with fabric;

c) double seat for long distance buses:

base body, rear cover, handle sectional member (optional);

padded cushion and back of a material having a self-forming "skin" or alternatively coated with fabric;

head-rest with handle;

tiltable arm-rest on the side of the corridor.

A further characteristic of the present invention consists in that said modular elements mentioned above are such as to permit to pass from a seat for city service to a seat for suburban or long distance service merely by adding some of said composable elements to the elements forming the base body.

A further basic characteristic of the present invention consists in that the particular shape of the upper portion of the seat permits the use of the holding handle and the insertion therein of the head-rest module without interference by said handle in this operation, the insertion of the head-rest being effected by means of fixing screws and associated plates provided in U-shaped lateral back grooves of the seat.

The invention will now be described in detail with particular reference to the accompanying drawings provided merely by way of a non-limitative example and in which:

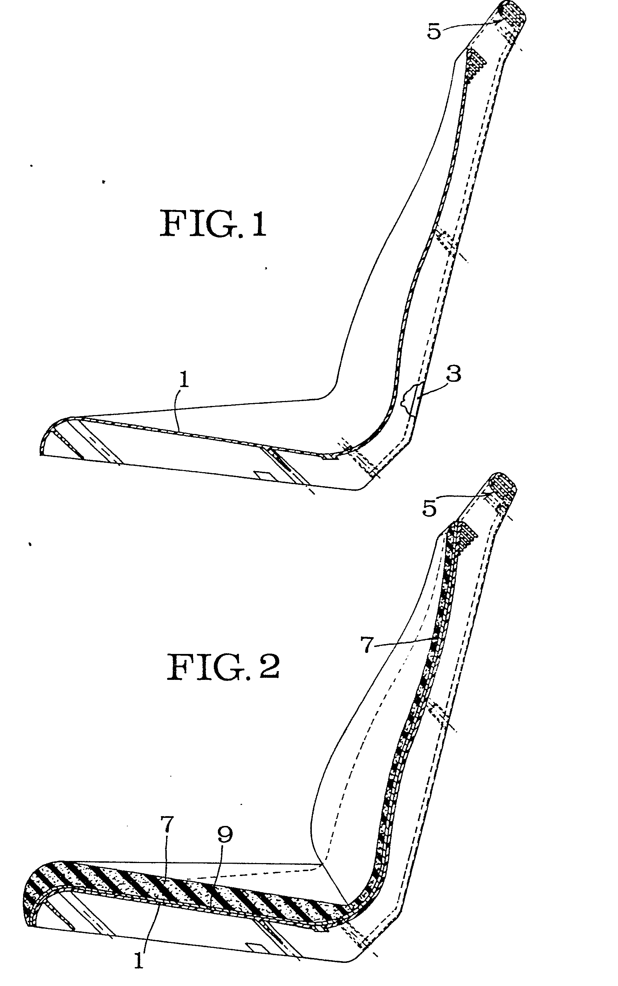

Fig. 1 is a longitudinal section through a seat for a city bus, or base seat;

Fig. 2 is a longitudinal section through a seat for a suburban bus;

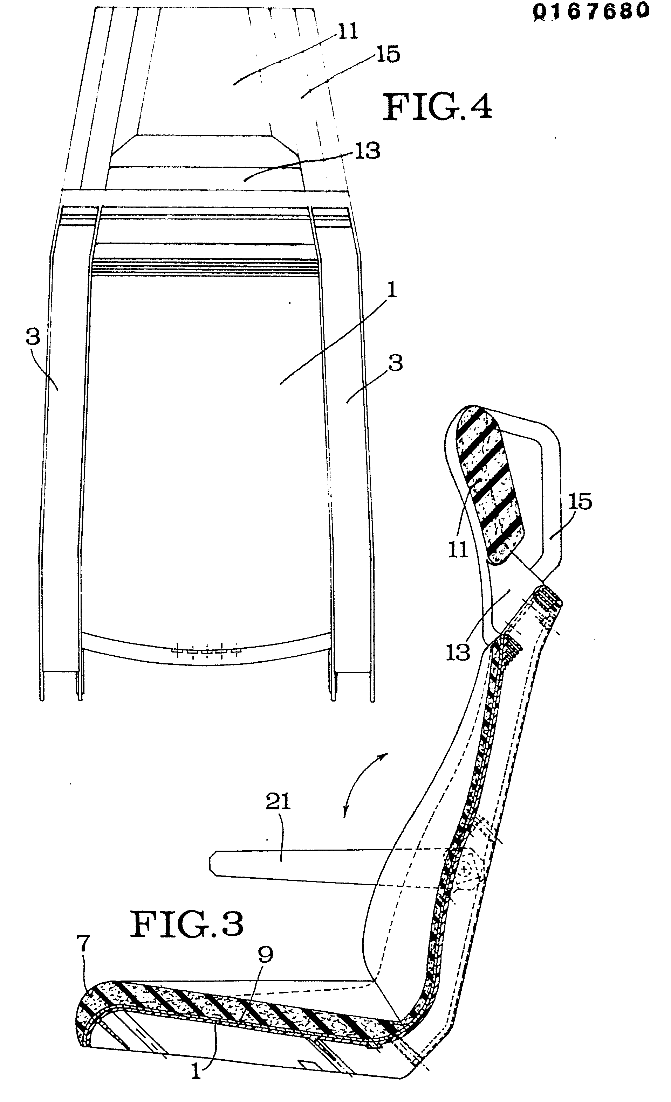

Fig. 3 is a longitudinal section through a seat for a long distance bus;

Fig. 4 is a rear view of the seat of Fig. 3;

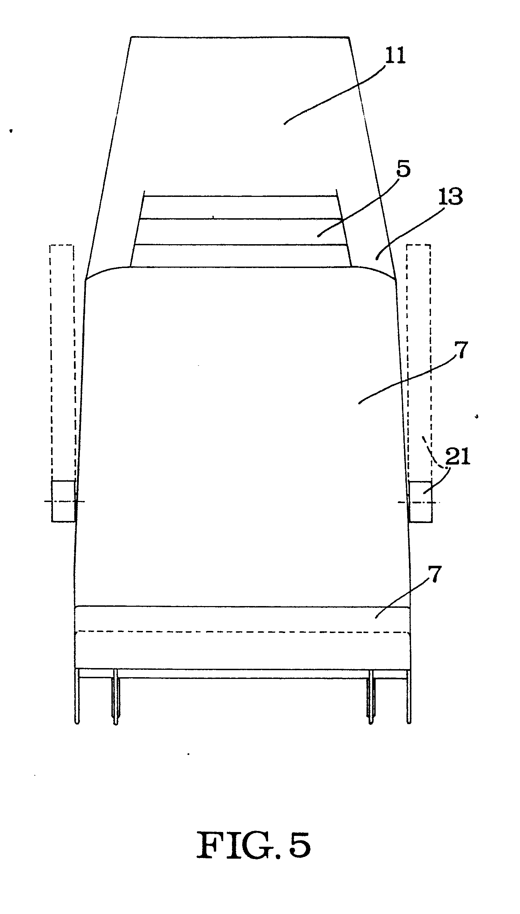

Fig. 5 is a front view of the seat of Fig. 3;

Fig. 6 is a partial front view of a seat showing the handle;

Fig. 7 is a partial front view of a seat with a head-rest applied thereto;

Fig. 8 is a section made through Fig. 7 along the line VIII-VIII and showing the particular way of securing said head-rest to the base seat;

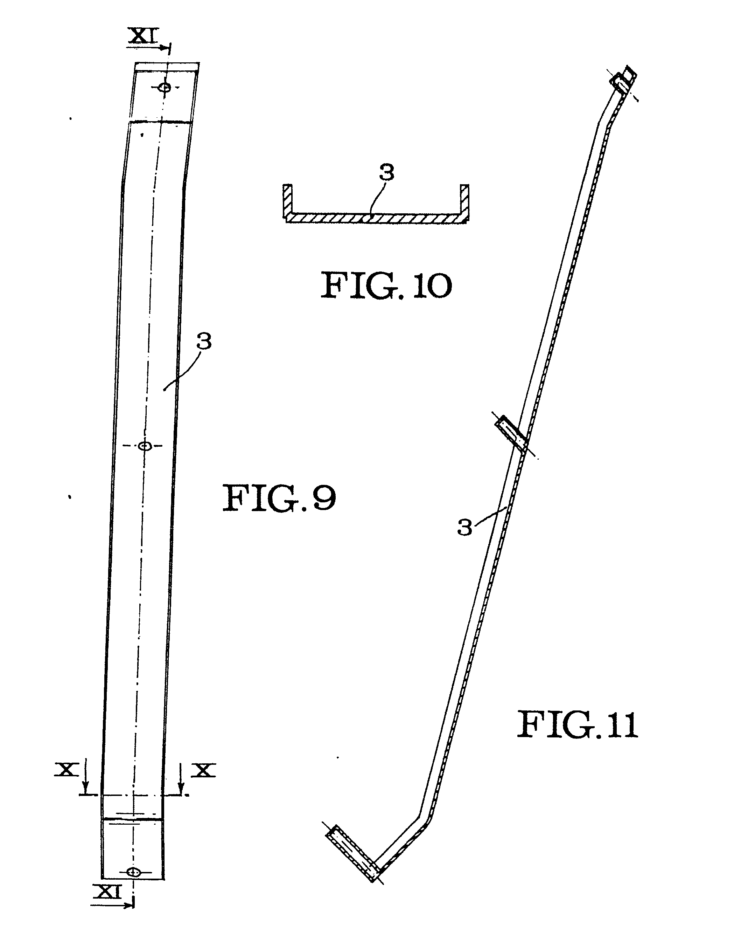

Fig. 9 is a front view of the covers for closing the seat;

Fig. 10 is a section taken along the line X-X of Fig. 9;

Fig. 11 is a section taken along the line XI-XI of Fig. 9.

As will be apparent from the Figures, the present seat is formed of a plurality of modular elements adapted to be assembled independently and capable of providing a base seat or single seat for city buses, from which, by adding some of said elements, the single or double seat for suburban buses and the double seat for long distance buses are obtained.

The base seat or single seat for city buses is substantially formed of a base body 1, a rear cover 3 made of two pieces which can be secured laterally to the central body of the back and a sectional member 5 for the head-rest. Said seat rests on an appropriate support, for example, in cantilever fashion (not shown) in view of the nature (single seat) of the seat itself.

The seat for suburban buses is obtained directly from the base seat described above with a base body 1, a rear cover 3 and a sectional handle member 5 to which are added a padded cushion and back 7 of foamed material having a self-forming "skin" such as, for example, foamed polyurethane of the like. In view of the nature of the seat (for suburban buses) the support therefor (not shown) is not exclusively made in cantilever fashion, but also a support with a wide foot portion for a double seat (not shown, either) is provided.

The seat for long distance buses is likewise derived from the base version of the seat, but in comparison with the seat for suburban buses alternatively is provided with a cushion and back 7 coated with fabric and secured, for example, to a support member 9 of curved plywood, in turn secured to the body 1 by means of screws and the like, and additionally carries a head-rest 11 of foamed material having a self-forming "skin" and provided with an inner frame 13 to permit it to be firmly secured to the base body, and provided with a lateral vertical handle 15 and a tiltable lateral arm-rest 21 secured to the right-hand and/or left-hand side of the back.

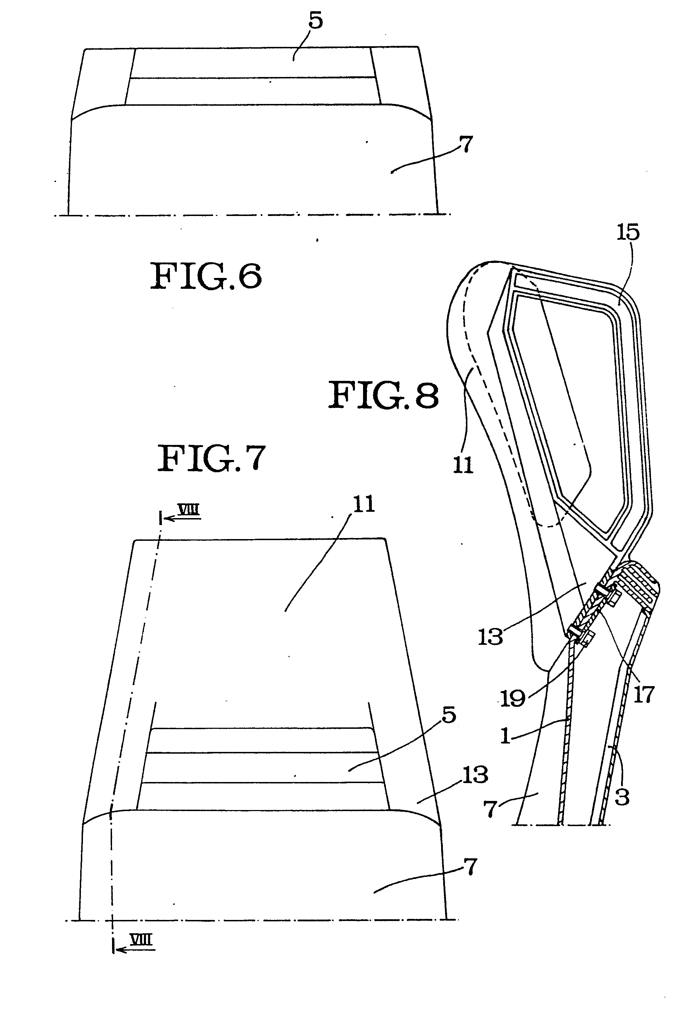

The head-rest 11 is best seen in Fig. 8.

The insertion of the head-rest 11 in the upper portion of the seat 7 is effected by means of two fixing plates 17 placed on either side of the seat, in appropriate lateral back recesses 3 so as to reduce the specific load in the area defined between the upper portion of the seat and the holding handle 5. Appropriate fixing screws 19 engage through said plates 17 in the plane bases of the head-rest module.

CLAIMS

1. A bus seat characterized in that it is composed of a plurality of modular elements such as:

a base body (1) formed of a single element moulded of plastics material such as, for example, polyamide or another type of resin, reinforced by fibreglass and moulded so as to form in the upper portion the transverse holding handle (5), said body being appropriately ribbed to ensure a certain bending strength of the seat and improve the conditions for mounting it on the base;

a rear cover (3) made of two pieces, a right-hand and a left-hand one, to cover the side portions of the back of the base body so as to conceal all fixing elements (screws, etc.);

a sectional member adapted to complete the transverse handle of the base body (optional);

a padded cushion and back (7) made of two or in one piece, for example, of foamed polyurethane having an outer surface or "skin" that forms itself together with said material, or coated with fabric, said padded cushion and back being secured to the base body (1) either directly or through a support member (9) (for example, of curved plywood) by means of screws and inserts;

a head-rest (11) made of one piece of foamed plastics with a "skin" that forms itself and provided with an inner frame (13) to permit it to be firmly secured to the base body, and formed integrally with vertical handles (15);

a tiltable lateral arm-rest (21) to be secured to the right-hand or left-hand side of the back;

said modular elements permitting the following solutions:

a) single seat for city buses;

base body (1), rear cover (3), handle sectional member (optional);

b) single and double seat for suburban buses:

base body (1), rear cover (3), handle sectional member (optional);

padded cushion and back (7) of a material having a self-forming "skin" or alternatively coated with fabric;

c) double seat for long distance buses:

base body (1), rear cover (3), handle sectional member (optional);

padded cushion and back (7) of a material having a self-forming "skin" or alternatively coated with fabric;

head-rest (11) with handle (15);

tiltable arm-rest (21) on the side of the corridor.

2. A modular bus seat according to claim 1, characterized in that said modular elements mentioned above are such as to permit to pass from a seat for city service to a seat for suburban or long distance service merely by adding some of said composable elements to the elements forming the base body.

3. A modular bus seat according to claims 1 and 2, characterized in that the particular shape of the upper portion.of the seat permits the use of the holding hand'e (5) and the insertion therein of the head-rest module (11) without interference by said handle in this operation, the insertion of the head-rest being effected by means of fixing screws (19) and associated plates (17) provided in U-shaped lateral back grooves of the seat.

FIG.1

FIG.2

0167680

FIG.4

FIG.3

FIG. 5

0167680

FIG.6

FIG.8

FIG.7

0167680

FIG. 10

3

FIG. 9

3

FIG. 11

3

XI

X X

XI